# EUROPÄISCHE PATENTSCHRIFT

(11) **EP 0 985 586 B1**
(45) Veröffentlichungstag und Bekanntmachung des Hinweises auf die Patenterteilung: **25.02.2009**
(21) Anmeldenummer: 99116801.4
(22) Anmeldetag: 01.09.1999
(51) Int. Cl.: B60T 8/17

(54) **Antiblockiersystem auf der Basis eines Fuzzy-Reglers für ein elektromechanisches Fahrzeug-Bremssystem**
Anti lock system for a vehicle electromechanical brake system based on a fuzzy controller
Système d'antiblocage pour un système de freinage électromécanique de véhicule basé sur un régulateur de logique floue

(30) Priorität: 07.09.1998 DE 19840826
(43) Veröffentlichungstag der Anmeldung: 15.03.2000
(73) Patentinhaber: PACIFICA GROUP TECHNOLOGIES PTY LTD, Victoria, 3165 (AU)
(72) Erfinder: Mertens, Anno, 81541 München (DE)
(74) Vertreter: Vossius, Volker

(56) Entgegenhaltungen:
- EP-A- 0 585 134
- US-A- 5 001 640
- US-A- 5 577 812

## Beschreibung

Die Erfindung betrifft ein Antiblockiersystem, bei dem aus mehreren Geschwindigkeitswerten und Druckwerten mit Hilfe eines Fuzzy-Reglers ein Aktuator in einem Bremssystem gesteuert wird.

Neue Anforderungen bei den Bremsfunktionen und die Forderung nach der Reduzierung der Montage- und Wartungskosten führen zu neuen Bremssystemen, bei denen die Kraft nicht mehr durch eine vom Fahrer ausgehende Bremsmomentanforderung, die direkt als Kraft über ein hydraulisches System übertragen wird, erzeugt wird, sondern bei denen mit Hilfe eines elektrischen Signals ein elektromechanischer Bremsaktuator gesteuert wird, der mittels einer elektrischen Energieversorgung eine Reibkraft an einer Bremse erzeugt. Auch bei einem elektromechanischen Bremssystem ist eine Vorrichtung sinnvoll, welche das Blockieren eines gebremsten Rades verhindert und somit die Fahrstabilität des gebremsten Fahrzeuges erhält. Hierzu werden Radgeschwindigkeit-Sensoreinrichtungen für jedes Rad oder für jede Gruppe von Rädern, und elektrische, kontinuierlich stellende Bremsdruck oder -kraftaktuatoren, die einen unabhängigen Bremsdruck oder eine unabhängige Bremskraft für jedes Rad oder für jede Radgruppe einstellen können, benötigt. Für jedes Rad liegt ein Raddrehzahlsensor vor, der ein Raddrehzahlsignal an die Rechen- und die Steuereinheit übermittelt. Aus diesen Raddrehzahlen wird in bekannter Weise der Radschlupf ermittelt, in dem zum Beispiel eine Fahrzeugreferenzgeschwindigkeit aus dem am schnellsten, nicht angetriebenen Rad unter Berücksichtigung von Lenkeinschlägen ermittelt wird und der Schlupf eines Rades aus Verhältnis zwischen gemessener Raddrehzahl und Fahrzeugreferenzgeschwindigkeit berechnet wird. Wenn der vom Fahrer vorgegebene Solldruck einen bestimmten von der Fahrbahnoberfläche abhängigen Wert überschreitet, würde das betreffende Rad blockieren.Dies ist aus bekannten Gründen unerwünscht. Deshalb muß der Solldruck so reduziert werden, daß ein Blockieren des Rades nicht mehr erfolgt.

Aus der US-Patentschrift 4,842,342 ist ein ABS-System auf der Basis eines Fuzzy-Reglers bekannt, bei dem aus Reifengeschwindigkeitswerten und Fahrzeugbeschleunigungswerten mit Hilfe eines Fuzzy-Reglers die Bremskraft eines hydraulischen Bremssystems geregelt wird.

Aus der US-Patentschrift 5,001,640, sowie aus dem Dokument EP 0 585 134, ist ein Antiblockiersystem auf der Basis eines Fuzzy-Reglers bekannt, bei dem neben Geschwindigkeitswerten der von einer elektronischen Steuereinheit angeforderte hydraulische Druck zur Regelung des Bremsdrucks herangezogen wird.

Die der Erfindung zugrundeliegende Aufgabe besteht nun darin, ein Antiblockiersystem auf der Basis eines Fuzzy-Reglers für ein elektromechanisches Bremssystem anzugeben, bei dem eine weitgehend optimale ABS-Regelung mit möglichst geringem Aufwand und einer relativ einfachen Regelbasis erreicht wird.

Diese Aufgabe wird erfindungsgemäß durch die Merkmale des Patentanspruchs 1 gelöst. Die weiteren Ansprüche betreffen vorteilhafte Ausgestaltungen der Erfindung.

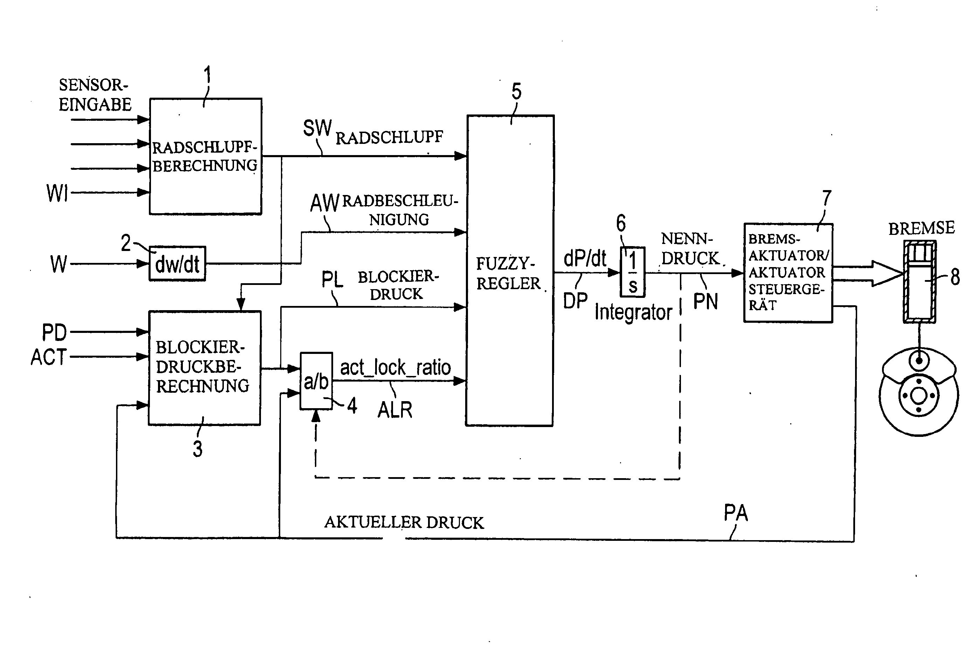

In der Zeichnung ist ein Ausführungsbeispiel eines erfindungsgemäßen Antiblockiersystems für ein einzelnes Rad dargestellt. In einer Einheit 1 zur Schlupfberechnung werden, wie eingangs bereits erwähnt, z. B. aus einer von mehreren Radgeschwindigkeiten WI eine Fahrzeuggeschwindigkeit und daraus wiederum im Zusammenhang mit einer Geschwindigkeit W des betreffenden Rades ein Schlupf SW berechnet und einem Fuzzy-Regler 5 sowie einer Einheit 3 zur Berechnung eines Blockierdruckes PL zugeführt. Durch ein Differenzierglied wird aus der Radgeschwindigkeit W die Radbeschleunigung AW ermittelt und ebenfalls dem Fuzzy-Regler 5 zugeführt. Die Einheit 3 und eine Teilereinrichtung 4 erhalten Signale PA für den aktuellen Druck aus einer Einheit 7, die aus einem elektrischen Bremsaktuator und einem zugehörigen Steuergerät besteht. Am Eingang der Einheit 7 wird ein Signal für einen Nenndruck PN einspeist, den die elektrische Bremse 8 erhalten soll. Der in der Einheit 7 vorliegende aktuelle Druck PA wird mit Hilfe des Signals eingangsseitig der Einheit 3 und der Teilereinrichtung 4 zugeführt. Zum Beispiel zum Beginn einer Bremsung wird der Einheit 3 durch Signale PO und ACT ein Startwert für einen Blockierdruck übergeben. Dieser Startwert kann beispielsweise der aktuelle Druck PA zu Beginn der ABS-Bremsung sein, also zum Zeitpunkt, bei dem das ABS gerade aktiv wird. In Abhängigkeit der Schlupfwerte SW wird das Signal für den Blockierdruck PL in der Einheit 3 derart aktualisiert, daß das Signal PA für den aktuellen Druck immer dann als Blokkierdruck gespeichert wird, wenn der Schlupf SW einen bestimmten Schwellenwert übersteigt, wobei der Schwellenwert fest vorgegeben oder aber bspw. durch einen eigenen Regler nachgeführt sein kann. Diese dynamische Anpassung des Blokkierdrucks trägt beispielsweise Änderungen der Fahrbahneigenschaften oder der Reifeneigenschaften Rechnung. Der in der Einheit 3 errechnete Wert für den Blockierdruck PL wird sowohl dem Fuzzy-Regler 5 als auch der Teilereinheit 4 eingangsseitig zugeführt, wobei in letzterer ein Signal für ein Druckverhältnis ALR gebildet und ebenso eingangsseitig dem Fuzzy-Regler zugeführt wird.

Zur Bildung des Druckverhältnisses ALR kann optional, in der Zeichnung gestrichelt angedeutet, an Stelle des Signals PA für den aktuellen Druck auch das Signal PN für den Nenndruck herangezogen werden. Der Fuzzy-Regler 5 erzeugt mit Hilfe einer Fuzzy-Regelbasis ausgangsseitig eine Druckänderungsrate DP, die einer Einheit 6 mit integrierendem Verhalten zugeführt wird und die das Signal für den Nenndruck PN bildet.

Im folgenden ist beispielhaft eine solche Fuzzy-Regelbasis, die die Eingangsgrößen des Fuzzy-Reglers in Form von Wenn-Dann-Regeln mit der Ausgangsgröße Druckänderungsrate DP verknüpft, dargestellt.
1) If SW is ok then DP is zero.
2) If SW is ok and AW is too_neg and ALR is one then DP is m100.
3) If SW is ok and AW is too_neg and ALR is very_large then DP is m100.
4) If SW is ok and AW is too_neg and ALR is small then DP is m20.
5) If SW is ok and AW is too_pos then DP is 5.
6) If SW is ok and ALR is one then DP is 10.
7) If SW is too_small and ALR is one and PL is small then DP is 20.
8) If SW is too_small and ALR is larger_one and PL is small then DP is 100.
9) If SW is too_small and ALR is one and PL is large then DP is 10.
10) If SW is too_small and ALR is larger_one and PL is large then DP is 50.
11) If SW is too_large and ALR is larger_one then DP is m20.
12) If SW is much_too_large and ALR is larger_one then DP is m20.
13) If SW is too_small and ALR is small and PL is large then DP is 100.
14) If SW is too_small and ALR is very_large and PL is large then DP is 10.
15) If SW is too_large and ALR is very_large and PL is large and AW is too_neg then DP is m300.
16) If SW is too_large and ALR is one and PL is large and AW is too_neg then DP is m300.
17) If SW is too_large and ALR is very_large and PL is large and AW is normal then DP is m50.
18) If SW is too_large and ALR is one and PL is large and AW is normal then DP is m50.
19) If SW is too_large and ALR is very_large and PL is large and AW is too_pos then DP is zero.
20) If SW is too_large and ALR is one and PL is large and AW is too_pos then DP is zero.
21) If SW is too_large and ALR is small and PL is large then DP is m20.
22) If SW is much_too_large and ALR is one and PL is large then DP is m300.
23) If SW is much_too_large and ALR is very_large and PL is large then DP is m300.
24) If SW is much_too_large and ALR is small and PL is large and AW is normal then DP is m100.
25) If SW is much_too_large and ALR is small and PL is large and AW is too_neg then DP is m100.
26) If SW is much_too-large and ALR is small and PL is large and AW is too_pos then DP is zero.
27) If SW is too_small and ALR is small and PL is small then DPis 20.
28) If SW is too_small and ALR is large and PL is small then DP is 10.
29) If SW is too_small and ALR is very_large and PL is small then DP is 10.
30) If SW is too_large and ALR is very_large and PL is small and AW is too_neg then DP is m300.
31) If SW is too_large and ALR is one and PL is small and AW is too_neg then DP is m300.
32) If SW is too_large and ALR is very_large and PL is small and AW is normal then DP is m10.
33) If SW is too_large and ALR is one and PL is small and AW is normal then DP is m10.
34) If SW is too_large and ALR is very_large and PL is small and AW is too_pos then DP is zero.
35) If SW is too_large and ALR is one and PL is small and AW is too_pos then DP is zero.
36) If SW is too_large and ALR is small and PL is small then DP is m10.
37) If SW is much_too_large and ALR is one and PL is small then DP is m100.
38) If SW is much_too_large and ALR is very_large and PL is small then DP is m100.
39) If SW is much_too_large and ALR is small and PL is small and AW is normal then DP is m10.
40) If SW is much_too_large and ALR is small and PL is small and AW is too_neg then DP is m20.
41) If SW is much_too_large and ALR is small and PL is small and AW is too_pos then DP is zero.

Für den Schlupf SW sind lediglich die linguistischen Werte "ok", "too_small", "too_large" und "much_too_large", für die Radbeschleunigung AW lediglich die linguistischen Werte "too_neg", "normal" und "too_pos", für den Blockierdruck PL nur die linguistischen Werte "is_small" und "is_large" und für das Druckverhältnis ALR nur die linguistischen Werte "very_large", "larger one", "one" und "small" vorhanden und aus ihrer englischen Übersetzung selbsterklärend. Im Folgeteil hat die Ausgangsgröße DP die linguistischen Werte 100, 50, 10, 5, zero, m10, m20, m50, m100 und m300, wobei "m" jeweils einen negativen Wert bedeutet.

Die Regelbasis ist vorzugsweise so aufgebaut, daß erstens abhängig vom Wert des Blockierdrucks PL verschiedene Blöcke mit Fuzzy-Regeln angesprochen werden, die auf unterschiedliche Fahrbahneigenschaften optimiert sind und daß zweitens die positive Druckänderungsrate je geringer ist, desto näher das Druckverhältnis ALR bei Eins liegt.

Bei diesem Antiblockiersystem ist eine gute und einfache Abstimmbarkeit, z. B. auf der Basis von Fahrversuchen, bereits dadurch möglich, daß lediglich Folgeteile in der Regelbasis geändert werden und die Bedingungsteile bestehen bleiben können.

## Patentansprüche

1. Antiblockiersystem auf der Basis eines Fuzzy-Reglers (5) für ein elektromechanisches Fahrzeug-Bremssystem (7, 8), **dadurch gekennzeichnet dass** der Fuzzy-Regler in Abhängigkeit eines Radschlupfes (SW), einer Radbeschleunigung (AW), eines Blockierdruckes (PL) und eines Druckverhältnisses (ALR) aus aktuellem Bremsdruck (PA) oder Nenndruck (PN) durch den Blockierdruck (PL) eine Bremsdruckänderungsrate (DP) bildet und bei dem eine Einheit (6) mit integrierendem Verhalten aus der Bremsdruckänderungsrate (DP) einen Nenndruck (PN) als Eingangsgrösse für das Fahrzeug-Bremssystem liefert, das seinerseits wiederum den aktuellen Bremsdruck als Vergleichsgrösse liefert.

2. Antiblockiersystem nach Anspruch 1, bei dem eine Einheit (3) zur Berechnung des Blockierdruckes (PL) derart vorgesehen ist, dass der aktuelle Druck (PA) jeweils dann als Blockierdruck (PL) gespeichert wird, wenn der Radschlupf (SW) einen bestimmten Schwellwert übersteigt.

3. Antiblockiersystem nach Anspruch 1 oder 2, bei dem der Fuzzy-Regler eine Regelbasis derart aufweist, dass die positive Bremsdruckänderungsrate (DP) je geringer ist, desto näher das Druckverhältnis (ALR) bei Eins liegt.

4. Antiblockiersystem nach einem der Ansprüche 1 bis 3, bei dem der Fuzzy-Regler eine Regelbasis derart aufweist, dass die Bremsdruckänderungsrate (DP) nur von der Radbeschleunigung (AW) und vom Druckverhältnis (ALR) abhängt, sofern der Radschlupf (SW) als in Ordnung bewertet wird.

5. Antiblockiersystem nach einem der Ansprüche 1 bis 4, bei dem der Fuzzy-Regler eine Regelbasis derart aufweist, dass für den Radschlupf (SW) lediglich linguistische Werte "in Ordnung", "zu klein", "zu gross" und "viel zu gross", für die Radbeschleunigung (AW) lediglich linguistische Werte "normal", "zu negativ" und "zu positiv", für das Druckverhältnis (ALR) lediglich linguistische Werte "Eins", "grösser als Eins", "klein", "gross", und "sehr gross" sowie für den Blockierdruck (PL) lediglich linguistische Werte "klein" und "gross" vorhanden sind.

## Claims

1. Anti-lock braking system based on a fuzzy controller (5) for an electromechanical vehicle braking system (7, 8), **characterized in that** the fuzzy controller calculates a brake pressure rate of change (DP) as a function of wheel slip (SW), wheel acceleration (AW), locking pressure (PL) and pressure ratio (ALR) composed of actual brake pressure (PA) or nominal pressure (PN) divided by locking pressure (PL), and wherein a unit (6) with integrating behavior provides, from the brake pressure rate of change (DP), a nominal pressure (PN) as the input quantity for the vehicle braking system, which in turn provides the actual brake pressure as a reference quantity.

2. Anti-lock braking system according to claim 1, wherein a unit (3) for calculating the locking pressure (PL) is provided such that the actual pressure (PA) is always stored as locking pressure (PL) when the wheel slip (SW) exceeds a certain threshold value.

3. Anti-lock braking system according to claim 1 or 2, wherein the fuzzy controller has a rule base such that the positive brake pressure rate of change (DP) becomes smaller as the pressure ratio (ALR) more closely approaches one.

4. Anti-lock braking system according to any one of claims 1 through 3, wherein the fuzzy controller has a rule base such that the brake pressure rate of change (DP) depends only on the wheel acceleration (AW) and the pressure ratio (ALR) if the wheel slip (SW) is evaluated as ok.

5. Anti-lock braking system according to any one of claims 1 through 4, wherein the fuzzy controller has a rule base such that only the linguistic values "ok," "too small," "too large," and "much too large" are present for the wheel slip (SW), only the linguistic values "normal," "too negative," and "too positive" are present for the wheel acceleration (AW), only the linguistic values "one," "larger than one," "small," "large," and "very large" are present for the pressure ratio (ALR), and only the linguistic values "small" and "large" are present for the locking pressure (PL).

## Revendications

1. Système antiblocage sur la base d'un contrôleur à logique floue (5) pour un système de freinage électromécanique de véhicules (7, 8), **caractérisé par le fait que** le contrôleur à logique floue détermine une fréquence de variation de la pression de freinage (PN) en fonction d'un taux de patinage (SW), d'une accélération des roues (AW), d'une pression de blocage (PL) et d'un rapport de pression (ALR) calculé sur la base de la pression de freinage instantanée (PA) ou pression nominale (PN) divisée par la pression de blocage (PL), et dans lequel une unité (6) à comportement intégrateur fournit une pression nominale (PN) comme grandeur d'entrée pour le système de freinage de véhicule sur la base de la fréquence de variation de la pression de freinage (DP), système qui fournit quant à lui la pression de freinage instantanée comme grandeur de référence.

2. Système antiblocage selon la revendication 1, dans lequel une unité (3) est prévue pour le calcul de la pression de blocage (PL), de telle nature que la pression instantanée (PA) est sauvegardée comme pression de blocage (PL) à chaque fois que le taux de patinage (SW) dépasse une certaine valeur seuil.

3. Système antiblocage selon la revendication 1 ou 2, dans lequel le contrôleur à logique floue présente un modèle de régulation de telle nature que la fréquence positive de variation de la pression de freinage (DP) est d'autant plus faible que le rapport de pression (ALR) se rapproche de 1.

4. Système antiblocage selon l'une des revendications 1 à 3, dans lequel le contrôleur à logique floue présente un modèle de régulation de telle nature que la fréquence de variation de la pression de freinage (DP) ne dépend que de l'accélération des roues (AW) et du rapport de pression (ALR) lorsque le taux de patinage (SW) est considéré comme en règle.

5. Système antiblocage selon l'une des revendications 1 à 4, dans lequel le contrôleur à logique floue présente un modèle de régulation de telle nature qu'il ne comprend que des valeurs linguistiques « en règle », « trop petit », « trop grand » et « beaucoup trop grand » pour le taux de patinage (SW), et seulement les valeurs linguistiques « normale », « trop négative » et « trop positive » pour l'accélération des roues (AW), et seulement les valeurs linguistiques « un », « plus grand que un », « petit », « grand » et « très grand » pour le rapport de pression (ALR), et seulement es valeurs linguistiques « petite » et « grande » pour la pression de blocage (PL).
